# EUROPEAN PATENT APPLICATION

(11) **EP 4 197 978 A1**
(43) Date of publication of application: **21.06.2023**
(21) Application number: 23155656.4
(22) Date of filing: 03.10.2019
(51) Int. Cl.: C03C 3/097, C03C 3/087, C03B 17/06, C03C 3/091, C03C 3/093

(54) **COMPOSITIONS AND METHOD FOR PREVENTING BAGGY WARP DEFECTS**

(30) Priority: 09.10.2018 US 201862743015 P
(62) Divisional of application: 19870161.7
(71) Applicant: Corning Incorporated, Corning, New York 14831 (US)
(72) Inventor: GUO, Xiaoju, New York, 14870 (US); MARKHAM, Shawn Rachelle, Kentucky, 40330 (US); YU, Jae Hyun, New York, 14814 (US)
(74) Representative: Elkington and Fife LLP

(57) **Abstract**

An aluminosilicate glass, including in mole percent on an oxide basis, MgO + CaO + SrO + Li₂O + ZnO + Y₂O₃ + ZrO₂ + La₂O₃ + TiO₂ + Nb₂O₅ + Ta₂O₅ in a range of from 5 mol% to 25 mol%. The glass is processable by (i) flowing the glass in a molten state over forming surfaces to form a glass ribbon, the forming surfaces converging at a root and (ii) drawing the glass ribbon using pulling rollers to form a glass sheet, wherein the pulling rollers are spaced at a pulling roller distance from the root, and wherein the glass exhibits a viscosity curve slope obtained by plotting a temperature gradient to increase a root viscosity of the glass at the root, to a higher viscosity at one of several positions between the root and the pulling rollers, and a viscosity of the glass at the pulling rollers. The glass comprises a liquidus viscosity, the root viscosity being less than the liquidus viscosity, and the glass comprising a viscosity curve slope that prevents a baggy warp defect. In certain embodiments, when the root viscosity of the glass is in a range of from about 70 kP to about 90 kP, and the viscosity of the glass at the pulling rollers is greater than 90 kP and less than or equal 1 X 10⁸ kP, the temperature gradient is less than 150 °C.

## Description

### CROSS-REFERENCE TO RELATED APPLICATION

This application claims the benefit of priority under 35 U.S.C. § 119 of U.S. Provisional Application Serial No. 62/743015 filed on October 9, 2018, the content of which is relied upon and incorporated herein by reference in its entirety.

### BACKGROUND

This disclosure relates to glass compositions and methods for preventing baggy warp defect.

When a glass composition is processed in a fusion down draw machine, molten glass flows into a forming apparatus comprising a forming body (also referred to herein as an "isopipe). The forming body can comprise a trough positioned in an upper surface of the forming body and converging forming surfaces that converge in a draw direction along a bottom edge (i.e., the "root") of the forming body. Molten glass delivered to the forming body trough overflows side walls (or "weirs") of the trough and descends along the converging forming surfaces as separate flows of molten glass. The separate flows of molten glass join at the root to produce a single ribbon of glass that is drawn by applying tension to the glass ribbon, such as by gravity, edge rolls and pulling rolls, to control the dimensions of the glass ribbon as the glass cools and a viscosity of the glass increases. When the glass composition, initially in the molten state at a high temperature, is exposed to a lower temperature for a significant amount of time while being processed in the fusion draw machine, the growth of crystal phases can initiate. The temperature and viscosity where these crystal phases start to grow is known as the liquidus temperature and liquidus viscosity, respectively. It is generally desired to process a glass composition such that its viscosity during processing does not exceed the liquidus viscosity. In certain glass compositions, particularly glass compositions with relatively low liquidus viscosities, typically, the viscosity of the glass composition at the root ("root viscosity") is reduced so that liquidus viscosity is avoided.

When reducing the viscosity of the glass composition at the root, however, certain glass compositions will exhibit a root viscosity that is below a value that will allow a positive pull force to be applied at the pulling rollers, and the glass will deform out of a flat plane. This phenomenon is known as baggy warp defect. Glass compositions continue to evolve with the use of new raw materials to improve glass performance. As the chemistry of a glass composition is adjusted, the liquidus viscosity can shift below the viscosity for stable forming conditions based on pull force.

There remains a need to identify and select glass compositions and methods of processing such glass compositions in a fusion down draw machine to prevent baggy warp defect. Avoiding baggy warp is particularly needed when a glass composition is processed at relatively low root viscosities that avoid approaching liquidus temperature and liquidus viscosity, so as to avoid the initiation of growth of crystal phase in the glass.

### SUMMARY

One aspect of the present disclosure provides an aluminosilicate glass that includes, in mole percent on an oxide basis, MgO + CaO + SrO + Li₂O + ZnO + Y₂O₃ + ZrO₂ + La₂O₃ + TiO₂ + Nb₂O₅ + Ta₂O₅ in a range of from about 5 mol% to 25 mol%, the glass processable by (i) flowing the glass in a molten state over forming surfaces to form a glass ribbon, the forming surfaces converging at a root and (ii) drawing the glass ribbon using pulling rollers to form a glass sheet. The pulling rollers are spaced at a pulling roller distance from the root, and the glass exhibits a viscosity curve slope obtained by plotting a temperature gradient to increase a root viscosity of the glass at the root, to a higher viscosity at one of several positions between the root and the pulling rollers, and a viscosity of the glass at the pulling rollers. The glass also includes a liquidus viscosity, the root viscosity being less than the liquidus viscosity, and a viscosity curve slope that prevents a baggy warp defect. When the root viscosity of the glass is in a range of from about 70 kP to about 90 kP, and the viscosity of the glass at the pulling rollers is greater than 90 kP and less than or equal 1 X 10⁸ kP, the temperature gradient is less than about 150 °C.

In certain embodiments, the glass further includes SiO₂ in a range of from about 50 mol % to about 75 mol %. The glass, in certain embodiments, exhibits a viscosity of 85 kP at a first temperature and a viscosity of 100 kP at a second temperature, in which there is a difference between the first temperature and the second temperature of less than about 8.5 °C. Alternatively, or in addition, the glass exhibits a viscosity of 85 kP at a first temperature and a viscosity of 200 kP at a third temperature, in which there is a difference between the first temperature and the third temperature of less than about 43 °C, the glass exhibits a viscosity of 85 kP at a first temperature and a viscosity of 500 kP at a fourth temperature, in which there is a difference between the first temperature and the fourth temperature of less than about 85 °C, and/or the glass exhibits a viscosity of 85 kP at a first temperature and a viscosity of 1000 kP at a fifth temperature, and wherein there is a difference between the first temperature and the fifth temperature of less than about 115 °C.

Another aspect of the present disclosure provides a method of manufacturing a glass sheet from a glass composition processed in a fusion down draw machine using pulling rollers. The method includes determining a viscosity curve slope for each of a plurality of glass compositions processed by: (i) flowing each of the plurality of glass compositions in a molten state over forming surfaces to form a glass ribbon, the forming surfaces converging at a root and (ii) drawing the glass ribbon using the pulling rollers to form the glass sheet, wherein the pulling rollers are spaced at a pulling roller distance from the root, and wherein the viscosity curve slope is obtained by plotting a temperature gradient to increase a root viscosity for each of the plurality of glass compositions at the root, to a higher viscosity at several positions between the root and the pulling rollers, and a viscosity at the pulling rollers. In certain embodiments, the temperature gradient is less than 150 °C, the root viscosity of each of the plurality of glass compositions is in a range of from about 70 kP to about 90 kP, and the viscosity of each of the plurality of glass compositions at the pulling rollers is greater than 90 kP and less than or equal 1 X 10⁸ kP. Each of the plurality of glass compositions comprises a liquidus viscosity, the root viscosity for each of the plurality of the glass compositions being less than the liquidus viscosity. The method further includes selecting from the plurality of glass compositions the glass composition that (a) includes an amount of MgO + CaO + SrO + Li₂O + ZnO + Y₂O₃ + ZrO₂ + La₂O₃ + TiO₂ + Nb₂O₅ + Ta₂O₅, in a range of from about 5 mol% to about 25 mol%; and (b) comprises a viscosity curve slope that prevents a baggy warp defect, and drawing the glass sheet using the glass composition having the viscosity curve slope that prevents the baggy warp defect.

In certain embodiments, the root viscosity is in a range of from about 75 kP to about 85 kP. In certain embodiments the temperature gradient to increase the root viscosity to a higher viscosity of 100 kP is less than about 8.5 °C, and/or the temperature gradient to increase the root viscosity to a higher viscosity of 200 kP is less than about 43 °C.

Another aspect of the present disclosure provides a method of manufacturing a glass sheet from a glass composition processed in a fusion down draw machine using pulling rollers, the method including determining (i) a liquidus viscosity of the glass composition, and (ii) a root viscosity of the glass composition at a root viscosity temperature for the glass composition at a root formed during a fusion down draw process, selecting one or more target downstream viscosities downstream from the root for the glass composition, said target downstream viscosities being higher in magnitude than said root viscosity, and lower in magnitude than said liquidus viscosity, and determining a temperature gradient to achieve the one or more target downstream viscosities in the glass composition, as compared to the root viscosity temperature for the glass composition, and comparing said temperature gradient to achieve any one of the one or more target downstream viscosities to a reference temperature gradient to achieve the target downstream viscosity in a second, reference glass composition at the root viscosity temperature in the fusion down draw machine, the second, reference glass composition known to avoid baggy warp defect. If any of the temperature gradients for any of the target viscosities is lower in magnitude than the reference temperature gradient to achieve the target viscosity in the second, reference glass composition, flowing the glass composition in a molten state over converging forming surfaces to form a glass ribbon, and rotating the pulling rollers to draw the glass ribbon to manufacture the glass sheet.

In certain embodiments, the root viscosity is in a range of from about 75 kP to about 85 kP (e.g., 85 kP) and the one or more target downstream viscosities is in the range of from about 90 kP to about 1 X 10⁸ kP. In certain embodiments, the reference temperature gradient to achieve a target downstream viscosity of 100 kP is about 8.5 °C, the reference temperature gradient to achieve a target downstream viscosity of 200 kP is about 43 °C, the reference temperature gradient to achieve a target downstream viscosity of 500 kP is about 85 °C, and/or the reference temperature gradient to achieve a target downstream viscosity of 1000 kP is about 115 °C.

Additional features and advantages will be set forth in the detailed description which follows, and in part will be readily apparent to those skilled in the art from that description or recognized by practicing the embodiments as described herein, including the detailed description which follows, the claims, as well as the appended drawings.

It is to be understood that both the foregoing general description and the following detailed description are merely exemplary, and are intended to provide an overview or framework to understanding the nature and character of the claims. The accompanying drawings are included to provide a further understanding, and are incorporated in and constitute a part of this specification. The drawings illustrate one or more embodiment(s), and together with the description serve to explain principles and operation of the various embodiments.

### BRIEF DESCRIPTION OF THE DRAWINGS

FIG. 1 is a perspective, partial cross-sectional view of a fusion down draw machine;
FIG. 2 is a graphical depiction of the temperature gradients required to increase the viscosity of a plurality of glass compositions from 85 kilopoise (kP) to 200 kP, and from 85kP to 500 kP; and
FIG. 3 is a graphical depiction of the temperature gradient to increase the viscosity of a plurality of glass compositions from 80 kP to several higher viscosities.

### DETAILED DESCRIPTION

Reference will now be made in detail to various embodiments, examples of which are illustrated in the accompanying examples and drawings.

It is noted that the terms "substantially" and "about" may be utilized herein to represent the inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue.

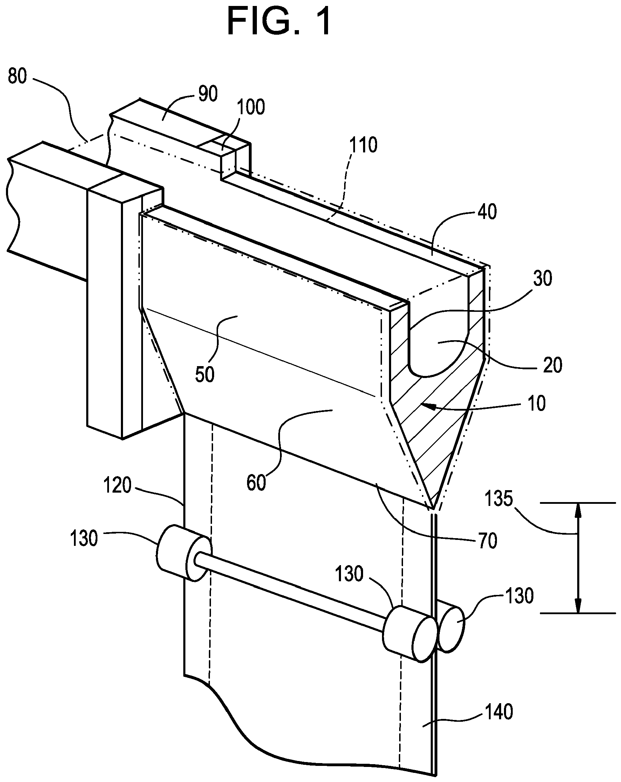

A fusion down draw machine is shown in FIG. 1, wherein an overflow trough member or forming body 10 includes an upwardly open trough 20 bounded on its longitudinal sides by wall portions 30, which terminate at their upper extent in opposed longitudinally-extending overflow side walls or weirs 40. The weirs 40 communicate with opposed outer sheet forming surfaces of forming body 10. As shown, forming body 10 is provided with a pair of substantially vertical forming surface portions 50 which communicate with weirs 40, and a pair of downwardly inclined converging surface portions 60 which terminate at a substantially horizontal lower apex or root 70 forming a glass draw line.

Molten glass 80 is fed into trough 20 by means of delivery passage 90 communicating with trough 20. The feed into trough 20 may comprise a single end or, if desired, a double end. A pair of restricting dams 100 are provided above overflow weirs 40 adjacent each end of trough 20 to direct the overflow of the free surface 110 of molten glass 80 over overflow weirs 40 as separate streams, and down opposed forming surface portions 50, 60 to root 70 where the separate streams, shown in chain lines, converge to form a sheet of virgin-surfaced glass 120. In the fusion process, pulling rollers 130 are placed downstream of the root 70 of forming body 10, pulling rollers 130 being spaced at a pulling roller distance 135 from the root 70. The pulling rollers 130 are used to adjust the rate at which the formed ribbon of glass leaves the converging forming surfaces and thus help determine the nominal thickness of the finished sheet. Suitable pulling rollers are described, for example, in U.S. Pat. No. 6,896,646, the contents of which are incorporated in their entirety herein by reference.

In one or more embodiments, the pulling rollers are designed to contact the glass ribbon at its outer edges, specifically, in regions just inboard of the thickened beads which exist at the very edges of the ribbon. The glass edge portions 140 which are contacted by the pulling rollers are later discarded from the substrates after they are separated from the sheet.

Depending on the particular glass composition at issue, the viscosity of a glass sheet processed on a fusion down draw machine can shift below the viscosity for stable forming conditions based on pull force. Pull force is a function of unsupported glass weight between the root of the isopipe and the pulling rollers. As discussed above, if the root viscosity is below a value to provide a positive pull force at the pulling rollers, the glass will deform out of a flat plane, a phenomenon known as baggy warp defect.

On the other hand, if in attempting to avoid baggy warp defect, the root viscosity is increased too much, the viscosity of the glass composition during processing may surpass the liquidus viscosity during processing, in which case devitrification will occur in the glass sheet and/or on the edge directors, which in turn may cause product loss.

According to one or more embodiments, it has been determined that certain glass compositions can be processed at relatively low root viscosities, and due to their ability to achieve higher viscosities upon being cooled by a specific temperature gradient, as compared to other glass compositions being cooled by that same specific temperature gradient, these glass compositions can still avoid baggy warp defect. Thus, according to one or more embodiments, glass compositions are identified and selected to provide a glass composition which exhibits a relatively rapid glass viscosity increase between the root and pulling rollers, and will be less susceptible to and can prevent baggy warp defect.

The magnitude of impact of the viscosity increase is related to the distance below the root in which the viscosity increase occurs. Viscosity increases close to the root provides the largest gain in pull force for the same root viscosity. U.S. Patent No. 8,429,936, hereby incorporated by reference, provides further discussion on pulling force and distances from the root.

The current method of addressing the baggy warp defect while avoiding liquidus viscosity during processing on a fusion down draw machine is to limit possible glass compositions to those with liquidus viscosities sufficiently higher than what is referred to as the baggy warp viscosity limit, particularly when processing glass sheets with thicknesses greater than 0.7 mm, greater than 0.8 mm, or greater than 0.9 mm. This current method results in the elimination of a large number of glass compositions having low liquidus viscosities from consideration, even though these glass compositions could otherwise be processable to obtain beneficial properties. It has been discovered that compositions with low liquidus viscosities, but having an appropriate viscosity curve slope, can be processed in a fusion down draw machine to form glass sheets having relatively high thicknesses (e.g., greater than 0.7 mm and less than 50 mm, greater than 0.8 mm and less than 50 mm, greater than 0.9 mm and less than 50 mm, greater than 1 mm and less than 50 mm), while still avoiding baggy warp defect.

"Viscosity curve slope," as used herein, refers to the temperature gradient to increase the viscosity, for example, from the root viscosity, to a higher viscosity at one of several positions between the root and the pulling rollers, and to the viscosity of the glass composition at the pulling rollers, when processed in a fusion down draw machine. As described in greater detail below in the Example, when the temperature of a particular composition is reduced by a temperature gradient caused by cooling the glass composition, a viscosity curve slope that avoids baggy warp will achieve higher marginal increases in viscosity, as compared to a marginal increase in viscosity achieved by compositions that do not have a viscosity curve slope that prevents baggy warp. Thus, an advantage of compositions with a viscosity curve slope that avoids baggy warp is that smaller temperature changes are needed to increase the stiffness of the glass composition as it is processed in a fusion down draw machine.

During processing on a fusion down draw machine, the increase in stiffness that occurs upon decreasing the root temperature of the glass composition as the composition is processed downstream from the root occurs down the draw and across the draw. For the same temperature gradient across the root (perpendicular to the flow of the glass), the viscosity on the ends (measure of glass stiffness) of the glass ribbon increases faster than in center of the root. Furthermore, when processing glass sheets with relatively narrower widths on a fusion down draw machine, the ends represent a larger percentage of the total width. Accordingly, it is easier to avoid baggy warp defect when processing glass sheets with narrower widths. When processing glass sheets that are wider and thicker, it is marginally more difficult to avoid the baggy warp defect.

In one or more embodiments, glass compositions and methods are provided which allow for a reduced temperature gradient between ends and center of the isopipe, which in turn results in a lower the root viscosity to avoid baggy warp defect. This enables glass compositions to be employed which have liquidus temperatures close to the baggy warp limit viscosities.

Compositions having a viscosity curve slope that prevents baggy warp will enable smaller temperature gradients vertically to help minimize baggy warp. High thermal extraction rates through radiation can cause larger across-the-ribbon temperature gradients when the across the draw thickness is not uniform. In glasses with viscosity curve slopes that do not prevent baggy warp, a larger amount of thermal extraction is needed to increase viscosity by the same relative amount. When cooling the glass composition directly after it exits the root of the isopipe, the pull force can be increased for the same root temperature.

Characteristics of compositions that can exhibit a viscosity curve slope that can prevent baggy warp defect will now be described.

In industrial silicate glasses, SiO₂ serves as a primary glass-forming oxide. The concentration of SiO₂ should be sufficiently high in order to provide the glass with sufficiently high chemical durability suitable for consumer applications. However, the glasses can't contain too much SiO₂ since the melting temperature (200 poise temperature) of pure SiO₂ or high-SiO₂ glasses is too high. Furthermore, high SiO₂ content generally generates a glass with a shallow viscosity curve, namely the temperature change between two fixed viscosity points is high. For purposes of embodiments of the present disclosure, the SiO₂ content needs to be reasonably low, 50-75 mol%, for example 50-70 mol%.

Al₂O₃ can also serve as a glass former in glass compositions. Like SiO₂, Al₂O₃ generally increases the viscosity of the melt and an increase in Al₂O₃ relative to the alkalis or alkaline earths generally results in improved durability. The structural role of the aluminum ions depends on the glass composition. When the concentration of alkali oxide (R₂O) is close to or greater than the concentration of alumina (Al₂O₃) all aluminum is found in tetrahedral coordination with the alkali ions acting as charge-balancers. However, high Al₂O₃ concentrations generally lower the liquidus viscosity. According to one or more embodiments, the Al₂O₃ concentration can be about 5-20 mol%, for example, about 8-20 mol%.

Alkali oxides (e.g., Li₂O, Na₂O, and K₂O) serve as aids in achieving low melting temperature and low liquidus temperatures. On the other hand, addition of alkali oxide dramatically increases the coefficient of thermal expansion (CTE) and lowers the chemical durability of the glass sheet. To perform ion exchange, the presence of a small alkali oxide (such as Li₂O and Na₂O) is required to exchange with larger alkali ions (e.g., K⁺) from a salt bath. Three types of ion exchange can generally be carried out:
1. Na⁺-for-Li⁺ exchange, which results in a deep depth of layer but low compressive stress;
2. K⁺-for-Li⁺ exchange, which results in a small depth of layer but a relatively large compressive stress; and
3. K⁺-for-Na⁺ exchange, which results in intermediate depth of layer and compressive stress.

In some embodiments, sufficiently high concentration of small alkali oxides (e.g., lithium and sodium) produce a large compressive stress in the glass, as compressive stress is proportional to the number of alkali ions that are exchanged out of the glass. In some embodiments, small alkali oxides are present in a range of from about 10 to about 20 mol%.

Divalent cation oxides (such as alkaline earth oxides, e.g., MgO, ZnO, SrO and CaO) also improve the melting behavior of the glass, but with respect to ion exchange performance, the presence of divalent cations acts to decrease alkali mobility. The negative effect on ion exchange performance is especially pronounced with the larger divalent cations. Furthermore, the smaller divalent cation oxides generally help the compressive stress more than the larger divalent cations. However, when the contents of MgO are high, they are prone to form forsterite (Mg₂SiO₄), thus causing the liquidus temperature to rise very steeply with the MgO contents above certain level. In some embodiments, presence of divalent oxides in a range of from about 2 to about 10 mol% aids in preventing the baggy warp defect.

The addition of B₂O₃ into the glasses can serve to improve the damage resistance of the glass (e.g., can provide a glass with a high indentation threshold). When boron is not charge-balanced by alkali oxides or divalent cation oxides, it will be in trigonal coordination state, and thus open up the structure. The network around the trigonal coordinated boron is not as rigid as tetrahedrally coordinated ones, and therefore, the glasses can tolerate some deformation before crack formation. See, e.g., U.S. Pat. No. 8,946,103, hereby incorporated by reference in its entirety. Furthermore, boron decreases the melting viscosity and effectively helps suppress zircon breakdown viscosity. In some embodiments, the glasses are free of boron oxide.

With respect to the viscosity curve slope, the high field strength cations are advantageous in providing glass compositions with a viscosity curve slope that avoids baggy warp defect. In certain embodiments, the glass composition includes a high field strength cation selected from magnesium, calcium, strontium, lithium, zirconium, tantalum, yttrium, lanthanum and combinations thereof. In one embodiment, the high field strength cation is selected from magnesium, calcium, strontium, lithium and combinations thereof.

As described above, according to some embodiments, a viscosity curve slope that avoids baggy warp defect requires less cooling in the fusion down draw machine below the root of the isopipe. A glass with high content of high field strength cations and a relatively low content of SiO₂ can provide glass compositions with viscosity curve slopes that avoids baggy warp defect. Suitable ranges of high field strength cations according to one or more embodiments include from about 5 to about 25 mol%.

As used herein, ionic field strength is defined as the charge of an ion divided by the square of its ionic radius. It is essentially a measure of the strength of the electrostatic field created by the ion when the ion is considered as a point charge in space. For example, the common ionic state of potassium is +1 with an ionic radius of 1.33 A (A=angstrom), yielding an ionic field strength of (+1/(1.33^{∗}1.33)=0.57. Sodium, with an equal ionic charge yet smaller ionic radius of 0.97 A has a higher field strength of 1.06. In general, higher ionic charges and/or smaller ionic radius will contribute to higher ionic field strengths.

### EXAMPLE

A plurality of glass compositions (A-O) were provided having the components set forth below in Table 1.

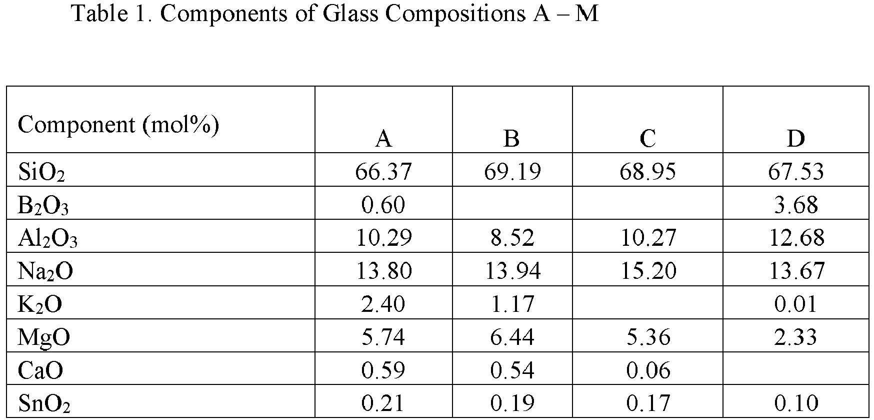

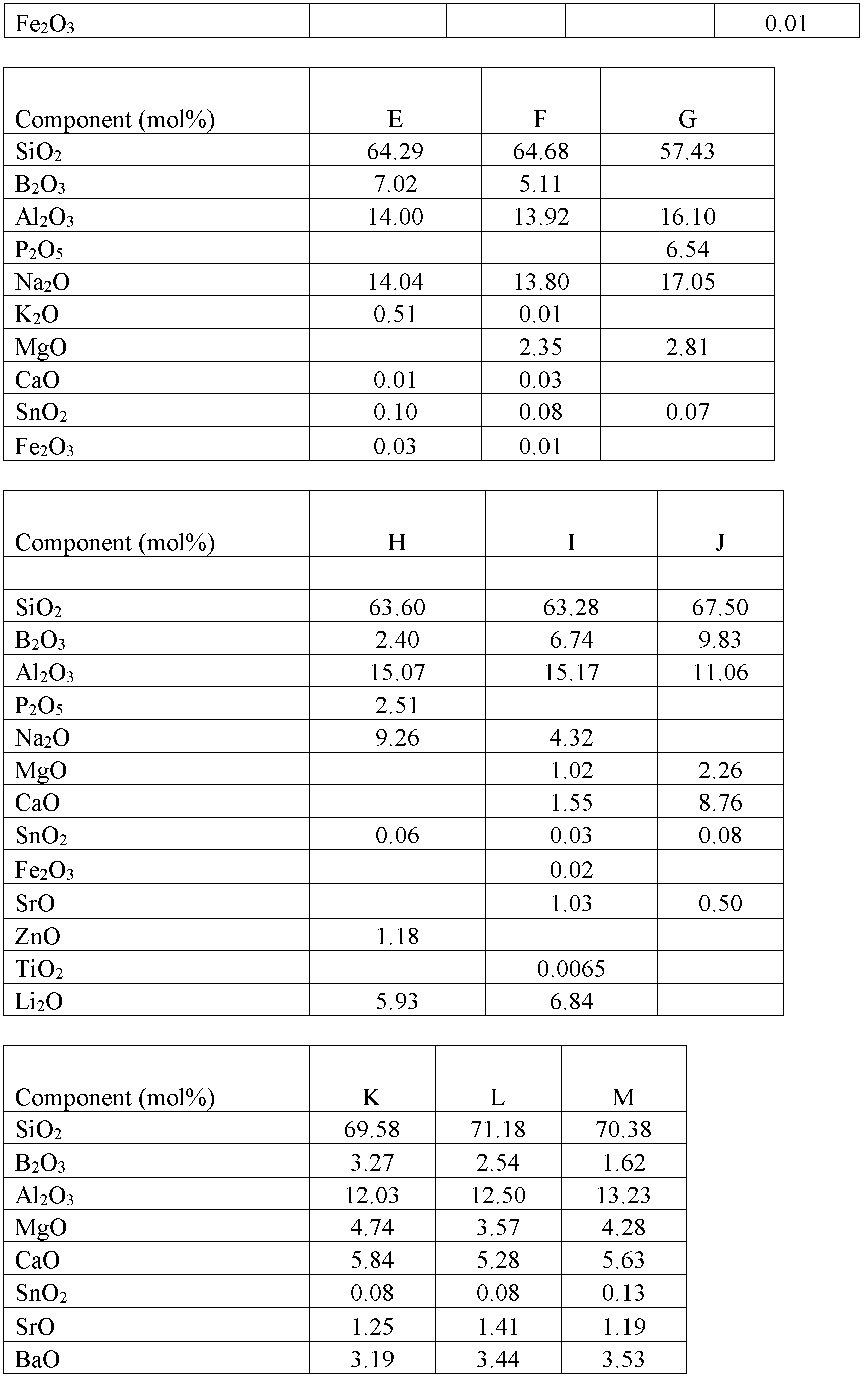

The glass compositions were each processed on a fusion down draw machine of the type shown in FIG. 1, in which the respective glass composition was provided in a molten state and flowed down the forming surfaces of the fusion down draw machine until converging at a root. From the root, the glass composition flowed downward by gravity and approached pulling rollers. The glass compositions were drawn by rotating the pulling rollers, which are located downstream from the root.

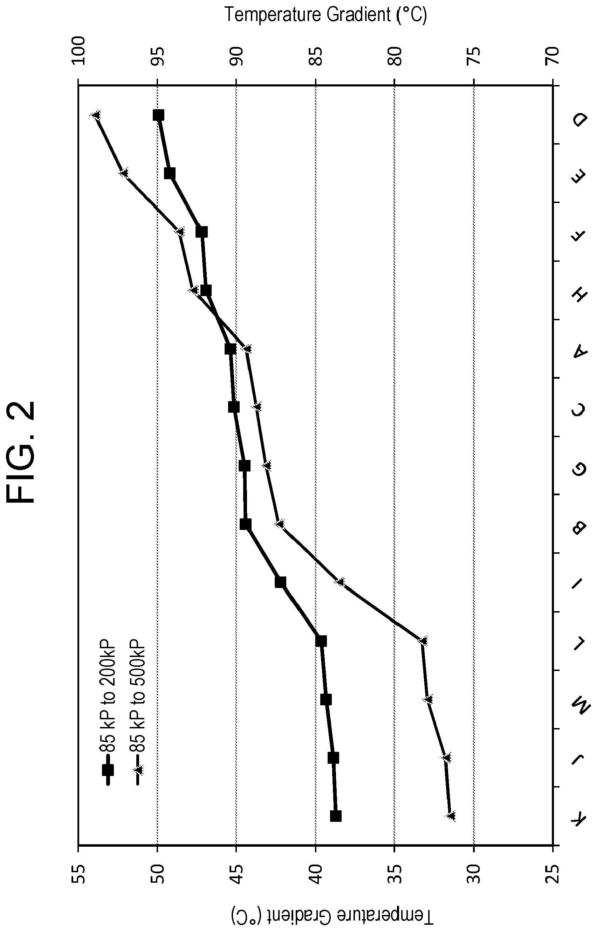

For each of the glass compositions, the temperature gradient (i.e., the reduction of the glass composition's temperature) to increase the viscosity of the glass composition from 85 kP to 200 kP, and to 500 kP (i.e., the viscosity curve slope) was recorded, and the results are set forth in FIG. 2. In FIG. 2, the left y-axis refers to the temperature gradient required to increase the viscosity of the glass composition from 85 kP to 200 kP and the right y-axis refers to the temperature gradient required to increase the viscosity of the glass composition from 85 kP to 500 kP.

As shown in FIG. 2, amongst the alkali glass compositions, composition K exhibited the lowest temperature gradient to increase the viscosity from 85 kilopoise (kP) (root viscosity) to a higher viscosity (200 kP and 500 kP). For example, as shown in FIG. 2, viscosity of composition K increased from 85 kP to 200 kP with a temperature reduction of less than 35 °C (see FIG. 2, left axis). Furthermore, the viscosity of composition K increased from 85 kP to 500 kP with a temperature reduction of less than 80 °C (see FIG. 2, right axis).

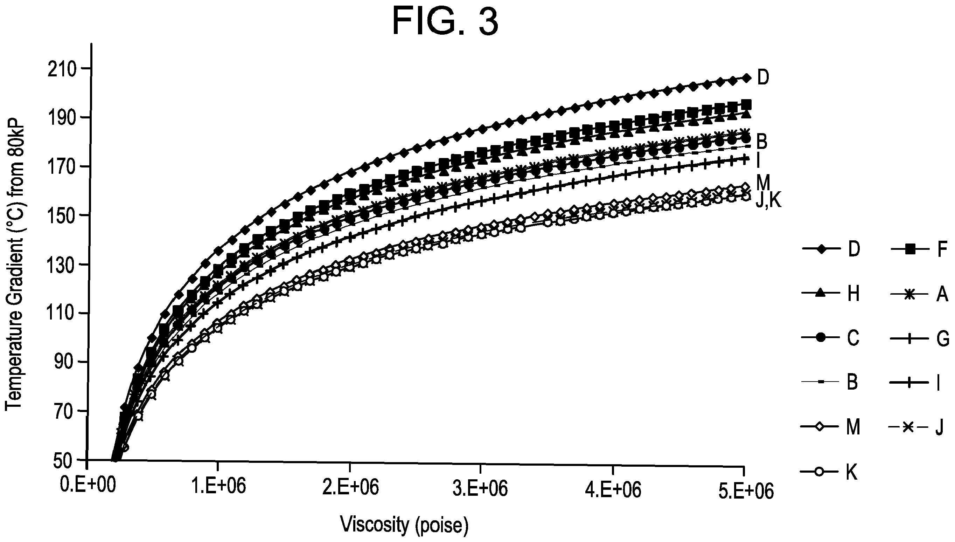

FIG. 3 depicts a plot of the temperature gradient to increase the root viscosity of glass compositions (80 kP) to several higher viscosities, up to 5 X 10⁶ poise (i.e., the viscosity curve slope). The viscosity ranges plotted along the x-axis of FIG. 3 correspond to the higher viscosity (relative to the root) of the glass at several positions between the root and the pulling rollers, and the viscosity at the pulling rollers, when processed in a fusion down draw machine. These results were obtained by the same procedure as described above with respect to FIG. 2.

As shown in FIG. 3, Composition D exhibited the highest temperature gradient to increase the viscosity from the root viscosity (80 kP) to the several higher viscosities. Composition D has a viscosity curve slope that does not prevent baggy warp defect. Compositions J and K, to the contrary, exhibited the lowest temperature gradient to increase the viscosity from the root viscosity (80 kP) to the several higher viscosities. Composition J and K has a viscosity curve slope that prevents baggy warp defect. In this Example, it was found that Composition I, and all compositions with temperature gradients lower than Composition I at the given viscosities, all have a viscosity curve slope to avoid baggy warp defect (i.e. Compositions I, M, J and K). Compositions D, F, H, A, C, G and B have viscosity curve slopes that do not avoid baggy warp defect.

Table 2, below, depicts temperature gradients (Δ °C) to increase the viscosity of the glass compositions from a root viscosity (here 85 kP) to higher viscosities, these higher viscosities corresponding to the viscosity of the glass at several positions between the root and the pulling rollers, and the viscosity at the pulling rollers, when processed in a fusion down draw machine. The data was obtained based by the same procedure as described above.

**Table 2: Temperature gradient (Δ °C) to bring glass compositions from 85 kP to a higher viscosity**

| Glass Composition | | | | | | |
|---|---|---|---|---|---|---|
| | A | B | C | D | E | F |
| 85 kP to 100 kP | 9.0 | 8.8 | 8.9 | 9.8 | 9.7 | 9.3 |
| 85 kP to 200 kP | 45.4 | 44.4 | 45.1 | 49.9 | 49.2 | 47.2 |
| 85 kP to 500 kP | 89.4 | 87.3 | 88.8 | 98.9 | 97.2 | 93.6 |
| 85 kP to 1000 kP | 120 | 117 | 119 | 133 | 131 | 126 |

| Glass Composition | | | | | | |
|---|---|---|---|---|---|---|
| | G | H | I | J | K | L |
| 85 kP to 100 kP | 8.7 | 9.3 | 8.3 | 7.7 | 7.6 | 7.8 |
| 85 kP to 200 kP | 44.5 | 46.9 | 42.2 | 38.9 | 38.7 | 39.6 |
| 85 kP to 500 kP | 88.1 | 92.7 | 83.5 | 76.8 | 76.5 | 78.3 |
| 85 kP to 1000 kP | 119 | 125 | 112 | 103 | 103 | 105 |

| Glass Composition | | | | | | |
|---|---|---|---|---|---|---|
| | M | | | | | |
| 85 kP to 100 kP | 7.7 | | | | | |
| 85 kP to 200 kP | 39.3 | | | | | |
| 85 kP to 500 kP | 77.9 | | | | | |
| 85 kP to 1000 kP | 105 | | | | | |

In certain embodiments, compositions included amongst those that avoid baggy warp defect include those in which the temperature gradient to increase the viscosity from root viscosity (85 kP) to 100 kP is less than about 8.5 °C, the temperature gradient to increase the viscosity from root viscosity (85 kP) to 200 kP is less than about 43 °C, the temperature gradient to increase the viscosity from root viscosity (85 kP) to 500 kP is less than about 85 °C, and/or the temperature gradient to increase the viscosity from root viscosity (85 kP) to 1000 kP is less than about 115 °C. In this particular Example, compositions I - M have a viscosity curve slope that prevents baggy warp defect, and baggy warp defect was avoided in these compositions.

It will be apparent to those skilled in the art that various modifications and variations can be made without departing from the spirit or scope of the disclosure.

Embodiments of the invention include the following:
[1] An aluminosilicate glass comprising:
   in mole percent on an oxide basis, MgO + CaO + SrO + Li₂O + ZnO + Y₂O₃ + ZrO₂ + La₂O₃ + TiO₂ + Nb₂O₅ + Ta₂O₅ in a range of from about 5 mol% to 25 mol%;
   the glass processable by (i) flowing the glass in a molten state over forming surfaces to form a glass ribbon, the forming surfaces converging at a root and (ii) drawing the glass ribbon using pulling rollers to form a glass sheet, wherein the pulling rollers are spaced at a pulling roller distance from the root, and wherein the glass exhibits a viscosity curve slope obtained by plotting a temperature gradient to increase a root viscosity of the glass at the root, to a higher viscosity at one of several positions between the root and the pulling rollers, and a viscosity of the glass at the pulling rollers;
   the glass comprising a liquidus viscosity, the root viscosity being less than the liquidus viscosity, and the glass comprising a viscosity curve slope that prevents a baggy warp defect; and
   wherein, when the root viscosity of the glass is in a range of from about 70 kP to about 90 kP, and the viscosity of the glass at the pulling rollers is greater than 90 kP and less than or equal 1 X 10⁸ kP, the temperature gradient is less than about 150 °C.
[2] The aluminosilicate glass of [1], further comprising SiO₂ in a range of from about 50 mol % to about 75 mol %.
[3] The aluminosilicate glass of [1], exhibiting a viscosity of 85 kP at a first temperature and a viscosity of 100 kP at a second temperature, and wherein there is a difference between the first temperature and the second temperature of less than about 8.5 °C.
[4] The aluminosilicate glass of [1], exhibiting a viscosity of 85 kP at a first temperature and a viscosity of 200 kP at a third temperature, and wherein there is a difference between the first temperature and the third temperature of less than about 43 °C.
[5] The aluminosilicate glass of [1], exhibiting a viscosity of 85 kP at a first temperature and a viscosity of 500 kP at a fourth temperature, and wherein there is a difference between the first temperature and the fourth temperature of less than about 85 °C.
[6] The aluminosilicate glass of [1], exhibiting a viscosity of 85 kP at a first temperature and a viscosity of 1000 kP at a fifth temperature, and wherein there is a difference between the first temperature and the fifth temperature of less than about 115 °C.
[7] A method of manufacturing a glass sheet from a glass composition processed in a fusion down draw machine using pulling rollers, the method comprising:
   determining a viscosity curve slope for each of a plurality of glass compositions processed by: (i) flowing each of the plurality of glass compositions in a molten state over forming surfaces to form a glass ribbon, the forming surfaces converging at a root and (ii) drawing the glass ribbon using the pulling rollers to form the glass sheet, wherein the pulling rollers are spaced at a pulling roller distance from the root, wherein the viscosity curve slope is obtained by plotting a temperature gradient to increase a root viscosity for each of the plurality of glass compositions at the root, to a higher viscosity at several positions between the root and the pulling rollers, and a viscosity at the pulling rollers;
      wherein the temperature gradient is less than 150 °C, the root viscosity of each of the plurality of glass compositions is in a range of from about 70 kP to about 90 kP, and the viscosity of each of the plurality of glass compositions at the pulling rollers is greater than 90 kP and less than or equal 1 X 10⁸ kP;
      wherein each of the plurality of glass compositions comprises a liquidus viscosity, the root viscosity for each of the plurality of the glass compositions being less than the liquidus viscosity; and
   selecting from the plurality of glass compositions the glass composition that (a) includes an amount of MgO + CaO + SrO + Li₂O + ZnO + Y₂O₃ + ZrO₂ + La₂O₃ + TiO₂ + Nb₂O₅ + Ta₂O₅, in a range of from about 5 mol% to about 25 mol%; and (b) comprises a viscosity curve slope that prevents a baggy warp defect; and
   drawing the glass sheet using the glass composition having the viscosity curve slope that prevents the baggy warp defect.
[8] The method of [7], wherein the root viscosity is in a range of from about 75 kP to about 85 kP.
[9] The method of [8], wherein the temperature gradient to increase the root viscosity to a higher viscosity of 100 kP is less than about 8.5 °C.
[10] The method of [8], wherein the temperature gradient to increase the root viscosity to a higher viscosity of 200 kP is less than about 43 °C.
[11] A method of manufacturing a glass sheet from a glass composition processed in a fusion down draw machine using pulling rollers, the method comprising:
   determining (i) a liquidus viscosity of the glass composition, and (ii) a root viscosity of the glass composition at a root viscosity temperature for the glass composition at a root formed during a fusion down draw process;
   selecting one or more target downstream viscosities downstream from the root for the glass composition, said target downstream viscosities being higher in magnitude than said root viscosity, and lower in magnitude than said liquidus viscosity;
   determining a temperature gradient to achieve the one or more target downstream viscosities in the glass composition, as compared to the root viscosity temperature for the glass composition;
   comparing said temperature gradient to achieve any one of the one or more target downstream viscosities to a reference temperature gradient to achieve the target downstream viscosity in a second, reference glass composition at the root viscosity temperature in the fusion down draw machine, the second, reference glass composition known to avoid baggy warp defect; and
   if any of said temperature gradients for any of said target viscosities is lower in magniude than said reference temperature gradient to achieve the target viscosity in the second, reference glass composition, flowing the glass composition in a molten state over converging forming surfaces to form a glass ribbon, and rotating the pulling rollers to draw the glass ribbon to manufacture the glass sheet.
[12] The method of [11], wherein the root viscosity is in a range of from about 70 kP to about 90 kP and the one or more target downstream viscosities is in the range of from about 90 kP to about 1 X 10⁸ kP.
[13] The method of [12], wherein the root viscosity is in a range of from about 80 kP to about 85 kP.
[14] The method of [12], wherein the reference temperature gradient to achieve a target downstream viscosity of 100 kP is about 8.5 °C.
[15] The method of [12], wherein the reference temperature gradient to achieve a target downstream viscosity of 200 kP is about 43 °C.
[16] The method of [12], wherein the reference temperature gradient to achieve a target downstream viscosity of 500 kP is about 85 °C.
[17] The method of [12], wherein the reference temperature gradient to achieve a target downstream viscosity of 1000 kP is about 115 °C.

## Claims

1. An aluminosilicate glass comprising:
in mole percent on an oxide basis, MgO + CaO + SrO + Li₂O + ZnO + Y₂O₃ + ZrO₂ + La₂O₃ + TiO₂ + Nb₂O₅ + Ta₂O₅ in a range of from about 5 mol% to 25 mol%;
the glass processable by (i) flowing the glass in a molten state over forming surfaces to form a glass ribbon, the forming surfaces converging at a root and (ii) drawing the glass ribbon using pulling rollers to form a glass sheet, wherein the pulling rollers are spaced at a pulling roller distance from the root, and wherein the glass exhibits a viscosity curve slope obtained by plotting a temperature gradient to increase a root viscosity of the glass at the root, to a higher viscosity at one of several positions between the root and the pulling rollers, and a viscosity of the glass at the pulling rollers;
the glass comprising a liquidus viscosity, the root viscosity being less than the liquidus viscosity, and the glass comprising a viscosity curve slope that prevents a baggy warp defect; and
wherein, when the root viscosity of the glass is in a range of from about 70 kP to about 90 kP, and the viscosity of the glass at the pulling rollers is greater than 90 kP and less than or equal 1 X 10⁸ kP, the temperature gradient is less than about 150 °C.

2. The aluminosilicate glass of claim 1, further comprising SiO₂ in a range of from about 50 mol % to about 75 mol %.

3. The aluminosilicate glass of claim 1, exhibiting a viscosity of 85 kP at a first temperature and a viscosity of 100 kP at a second temperature, and wherein there is a difference between the first temperature and the second temperature of less than about 8.5 °C.

4. The aluminosilicate glass of claim 1, exhibiting a viscosity of 85 kP at a first temperature and a viscosity of 200 kP at a third temperature, and wherein there is a difference between the first temperature and the third temperature of less than about 43 °C.

5. The aluminosilicate glass of claim 1, exhibiting a viscosity of 85 kP at a first temperature and a viscosity of 500 kP at a fourth temperature, and wherein there is a difference between the first temperature and the fourth temperature of less than about 85 °C.

6. The aluminosilicate glass of claim 1, exhibiting a viscosity of 85 kP at a first temperature and a viscosity of 1000 kP at a fifth temperature, and wherein there is a difference between the first temperature and the fifth temperature of less than about 115 °C.

7. A method of manufacturing a glass sheet from a glass composition processed in a fusion down draw machine using pulling rollers, the method comprising:
determining a viscosity curve slope for each of a plurality of glass compositions processed by: (i) flowing each of the plurality of glass compositions in a molten state over forming surfaces to form a glass ribbon, the forming surfaces converging at a root and (ii) drawing the glass ribbon using the pulling rollers to form the glass sheet, wherein the pulling rollers are spaced at a pulling roller distance from the root, wherein the viscosity curve slope is obtained by plotting a temperature gradient to increase a root viscosity for each of the plurality of glass compositions at the root, to a higher viscosity at several positions between the root and the pulling rollers, and a viscosity at the pulling rollers;
wherein the temperature gradient is less than 150 °C, the root viscosity of each of the plurality of glass compositions is in a range of from about 70 kP to about 90 kP, and the viscosity of each of the plurality of glass compositions at the pulling rollers is greater than 90 kP and less than or equal 1 X 10⁸ kP;
wherein each of the plurality of glass compositions comprises a liquidus viscosity, the root viscosity for each of the plurality of the glass compositions being less than the liquidus viscosity; and
selecting from the plurality of glass compositions the glass composition that (a) includes an amount of MgO + CaO + SrO + Li₂O + ZnO + Y₂O₃ + ZrO₂ + La₂O₃ + TiO₂ + Nb₂O₅ + Ta₂O₅, in a range of from about 5 mol% to about 25 mol%; and (b) comprises a viscosity curve slope that prevents a baggy warp defect; and
drawing the glass sheet using the glass composition having the viscosity curve slope that prevents the baggy warp defect.

8. The method of claim 7, wherein the root viscosity is in a range of from about 75 kP to about 85 kP.

9. The method of claim 8, wherein the temperature gradient to increase the root viscosity to a higher viscosity of 100 kP is less than about 8.5 °C.

10. The method of claim 8, wherein the temperature gradient to increase the root viscosity to a higher viscosity of 200 kP is less than about 43 °C.
